# EUROPEAN PATENT APPLICATION

(11) **EP 2 706 472 A1**
(43) Date of publication of application: **12.03.2014**
(21) Application number: 13171002.2
(22) Date of filing: 07.06.2013
(51) Int. Cl.: G06F 17/30

(54) **A system and method for phonetic searching of data**

(30) Priority: 06.09.2012 US 201213605084
(71) Applicant: Avaya Inc., Basking Ridge, NJ 07920-2311 (US)
(72) Inventor: Ponting, Keith Michael, West Malvern, WR14 4DT (GB); Mellor, Brian Andrew, Malvern, WR14 3SL (GB); Wilkins, Malcolm Fintan, Hereford, HR1 2QS (GB); Wynn, Gareth Alan, Malvern, WR14 3DD (GB)
(74) Representative: Brophy, David Timothy

(57) **Abstract**

A method for phonetically searching media including a plurality of audio tracks is disclosed where each audio track is indexed to provide a phonetic representation of the audio track. The method comprises obtaining a text search query and searching for the text query against a set of reference documents to obtain a sub-set of pseudo-relevant documents. The pseudo-relevant documents are examined for a set of search expressions characterizing the pseudo-relevant documents. A phonetic representation corresponding to at least some of the set of search expressions is provided and for each of the phonetic representations of the search expressions, the indexed phonetic representations for one or more of the plurality of audio tracks is phonetically searched to provide any indicators of the incidence of the search expression within the one or more audio tracks. The resulting indicators from said phonetic searching are combined into a set of combined results for each of the set of search expressions; and the combined results returned.

## Description

### Field

The present invention relates to a system and method for phonetic searching of data.

### Background

Query expansion for text searching is known. In some query expansion applications, a text search expression is compared with a set of reference documents to select from these documents a relatively small set of expressions relevant to the search expression. This set of expressions is then used to search a target set of documents. The results for each search from the expanded set of expressions are combined to provide a final search result - for example, by ranking the most relevant documents from the result set and removing duplicate results.

Important factors in query expansion for text searching are "stemming" and "stop word removal", for example, as disclosed by Pierre Jourlin, Sue E. Johnson, Karen Sparck Jones, and Philip C. Woodland. "General query expansion techniques for spoken document retrieval", pages 8-13 in Proceedings ESCA Tutorial and Research Workshop "Accessing Information in Spoken Audio", Cambridge, UK, April 1999. Thus, for example, certain query terms are reduced to their root form and common words are removed from the search expression. Typically, the corpus of reference documents is reduced to "bags of words", recording:
- for each word, or term, "document frequency", which is the number of distinct documents in which that term occurs;
- for each document and term, "term frequency", which is the number of times that term occurs in that document.

This approach however would not be appropriate for phonetic searching a media database including audio tracks because using a stemmed or abridged search expression could produce a phonetic equivalent unlikely to be found within normal speech recorded in the media database. Equally, breaking reference documents into their most common or distinctive phonemes would be meaningless.

It should also be noted that audio databases do not typically or necessarily have a corresponding text database (one reason being that text transcription is extremely processor intensive) and if the database had been transcribed into text, it would be much easier to search the text database and to find a corresponding entry in the audio database. Thus, the need for phonetic searching would be obviated.

US 2010/0211569, Avaya, discloses a system which utilizes training data that comprises a plurality of training documents. Each of the plurality of training documents comprises a training token(s). The plurality of training documents are clustered into a plurality of clusters based on at least one training token in the plurality of training documents. Each cluster contains at least one training document. A Boolean query(s) is generated for a cluster based on an occurrence of the at least one training token in a training document in the plurality of training documents. The system gets production data that comprises a plurality of production documents. Each of the plurality of production documents comprises a production token(s). The Boolean query(s) is then executed on the production data.

In the field of phonetic searching, US2009/0326947 discloses using a topic categorisation mechanism, but based around explicit training with audio material labelled according to a pre-specified topic hierarchy.

Likewise Timothy J. Hazen, Fred Richardson and Anna Margolis, "Topic identification from audio recordings using word and phone recognition lattices", Proceedings of the IEEE Workshop on Automatic Speech Recognition and Understanding, Kyoto, Japan, December 2007; and Christophe Cerisara, "Automatic discovery of topics and acoustic morphemes from speech", Computer Speech and Language, v.23 no.2, p.220-239, April, 2009 - both start from training data labelled with a pre-set list of topics and are concerned with determining topic-related phoneme sequences and word fragments.

It is an object of the present invention to provide improved searching of audio databases.

### Summary

The present invention comprises a method for phonetic searching of data according to claim 1.

In a further aspect, there is provided a computer program product stored on a computer readable storage medium which when executed on a processor is arranged to perform the steps of any one of claims 1 to 15.

In a still further aspect, there is provided a phonetic search system arranged to perform the steps of any one of claims 1 to 15.

The present invention allows a user to search for the occurrence of topics in audio material, where the topics are specified by a search string, but with the desire to broaden the search beyond occurrences purely containing the words in the search string.

### Brief Description of the Drawings

An embodiment of the invention will now be described, by way of example, with reference to the accompanying drawing, in which:

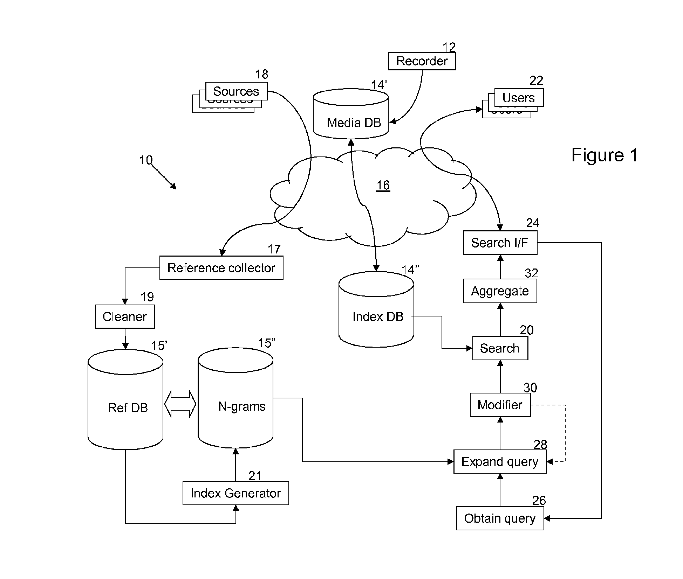

Figure 1 shows schematically the steps involved in phonetic searching according to an embodiment of the present invention.

### Description of the Preferred Embodiment

Referring now to Figure 1, which shows a phonetic search system 10 according to an embodiment of the present invention. A recording system 12 provides a database 14' of media files including tracks of audio information which is to be searched. The media could comprise, for example, broadcast television or radio programmes or in other implementations, the media could comprise recordings of contacts from a contact center (not shown) between users and agents of the contact center, or in still further implementations the media could comprise recordings of video calls; or video recorded events. Typically, access to the media files is provided across a network 16 which could be any of a LAN, WAN or Internet. Depending on requirements and resources, the media files could be copied so that they are locally available to the search system 10.

Phonetic information is extracted for each media file and this is stored in an index database 14" with index information in the database 14" pointing to corresponding audio information in the database 14'. One particularly useful scheme for implementing this indexing is described in co-filed European Application No. 13170987.5 entitled "A system and method for phonetic searching of data" (Ref: 512125-EP-NP / P105534EP00).

In the embodiment, phonetic information extracted from the audio files is shown stored locally in the index database 14". However, in other implementations, a phonetic search engine 20 and the index database 14" could be remote from the remainder of the system 10 with a search interface requesting the phonetic search engine 20 to make specific searches as required. In any case, at least phonetic information corresponding to the audio information to be searched needs to be available to the phonetic search engine 20.

Separately, source material 18 for a reference database 15' is generated by a collector 17. Ideally, the material for this database 15' comprises a collection of general text material, with as far as possible each database file or object containing text relevant to one or a small number of related topics, these topics in turn being of interest to users and relating to the subject of the audio tracks stored in the database 14'.

Source material 18 could include broadcaster web sites which often include news articles corresponding to broadcast programme material - each article or substantial section of an article representing a separate reference document/object within the database 15'.

In one particular, case where the media files comprise parliamentary broadcasts, source material 18 could comprise transcriptions of such broadcasts which are usually available separately.

Other useful sources 18 could be user manuals for products being handled by agents of a contact center. These could be broken down by section to provide separate reference database objects/files relating to given topics.

Nonetheless, sources 18 could be more general and could comprise for example feeds from social networking sources such as Twitter or Facebook.

Using a limited number of sources such as the above examples enables material to be largely automatically cleaned and divided into separate objects within the database. So for example, the layout of a broadcaster website will be relatively consistent and similarly product manuals and other literature from a given vendor providing a contact center should be reasonably consistent. This enables non-useful material for example, headers repeated across all articles/sections to be stripped either as it is gathered by the collector 17 or subsequently by a cleaner 19 as described below.

Nonetheless, it should be appreciated that the invention is not limited to collecting any number or any particular form of source material.

Collected material can either be cleaned as it is received by a cleaner 19 before being written to the database; and/or in addition or alternatively the database material can be cleaned once it is written to the database 15'. The reference database 15' can be continually updated by the collector 17 and cleaner 19 and, for example, once it has reached capacity, older documents or redundant material can be removed.

As mentioned above, it can be useful to clean the reference database to some extent to ensure the most useful data is retained for expanding a search query. Some examples of the cleaning of reference documents include:
a) Transliteration - ensuring that all the character sequences are within a specified encoding, for example ASCII or Unicode. This is because, ultimately search expressions which are chosen will need to be converted into a phonetic stream and there is little advantage to retaining any material within the reference database which is not readily convertible to phonetic format.
b) Replacement of sequences which appear to be mathematical formulae with, for example, "+++".
c) Replacement of UTF-8 sequences in non-UTF-8 encoded web pages with equivalent characters.
d) Translation of characters with an eighth bit set to an equivalent ASCII character or HTML entity - for example the hexadecimal 90 is translated to "’" (right single quotation mark).
e) Replacement of numbers or dates with generic sequences for example "xNx" for numbers and "yDy" for dates. This avoids the occurrence of dates or numbers in search expressions purely because (in a relatively sparse database) spurious associations can appear between numbers and topics. It is nonetheless appreciated that this approach has the disadvantage of ignoring any semantic associations of particular number or date sequences, such as (in the UK) 1066 being the date of an invasion or (in the US) 4th July. In larger databases, there might be sufficient statistical strength to make this replacement un-necessary.
f) Translation of other non-ASCII characters either to an appropriate ASCII near-equivalent or to "∼" if there is no obvious equivalent.
g) Some source documents including for example, web pages, could comprise a tree structure with each node of the tree comprising fragments of document text. In some implementations, a node and its text could be retained if and only if it has either: no hyperlinks and more than a specified minimum number (say 10) of words or more than another limit (say 20) of words per hyperlink.
h) Again, where source material is taken from a website, individual page documents can contain certain named nodes which are known to frequently contain paragraphs directly below that node duplicated in other documents. Any such named nodes (except a top-level document) could be discarded.
i) Also nodes in structured documents which comprise certain keywords, for example, "disclaimer" are generally known to comprise boilerplates and such nodes can be discarded from documents stored within the database 15'.
j) Other techniques for identifying boilerplates are described in Christian Kohlschütter, Peter Fankhauser, Wolfgang Nejdl: "Boilerplate detection using shallow text features". WSDM 2010: 441-450 and these can also be implemented in certain embodiments of the present invention.
k) Removal of duplicate documents and/or paragraphs - second and subsequent occurrences of any documents/paragraphs can be removed on the basis of a "checksum", for example, generated with MD4, computed for each document/paragraph after all the above cleaning steps. (This step is important to avoid query expansion paying too much attention to terms appearing in duplicates.)
l) Frequently occurring (for example, more than 500) paragraphs can also be discarded from documents within the reference database 15'.

Once reference material has been cleaned, a set of expressions (N-grams) is generated for each separate document/object of the reference database 15' by an index generator 21. Whereas for text searching, a document might be divided into a bag of words with a count kept of each occurrence of (non-stop) word within the document, in the present case, a document/object is associated with sets of N-grams, each N-gram comprising a sequence of N words from the reference document, with N typically varying from 2-5. Thus, a count is kept of each instance of word pair, word triplet, quad etc appearing in respective documents of the reference database 15'.

In order to rationalise the number of N-grams maintained for any given document/object and to improve the relevance of their count, some of the following steps can be taken to equate separate instances of N-grams for the purposes of counting:
- the text of a first occurrence of an N-gram is recorded as a reference form of the N-gram, but a "stripped" form is used for comparing and counting in which:
   ○ case is ignored (but a lower-case instance would replace an upper case instance as the reference form);
   ○ trailing' are removed, so that, for example, Saturdays' and saturdays are counted as equivalent;
   ○ trailing's are removed, so that, for example, Saturday's and saturday are counted as equivalent;
   ○ all non-alphabetic characters are removed, which may lead to some ambiguity, but allows, for example, painkilling, pain-killing and pain killing to be treated as equivalent;
   ○ embedded' and 's are removed, so that, for example, "BBC's correspondent" and "BBC correspondent" are counted as equivalent.
- stop words are trimmed from either end of a candidate N-gram for the purposes of comparing with other N-grams and counting;
- N-grams are only counted if they meet the following heuristic constraints:
   ○ the number of distinct words N must be between 2 and 5.
   ○ the phonetic length must be at least 12 phonemes in the shortest pronunciation.
   ○ the minimum number of occurrences within the set of reference documents is set as 2.
- N-grams may not bound characters or sequences such as "∼", "+++" "xNx" or "yDy" which have been inserted at the cleaning stage.
- If two M-grams (M<N) obtained by removing the leading word and any stop words adjacent to it, and by removing the trailing word and any adjacent stop words both satisfy the heuristic constraints above and therefore would be included, the later instance of N-gram is not counted separately.

The result of this is a set of indexed candidate search phrases 15" associated with each cleaned document/object of the reference database 15'.

As the target database 14" comprises phonetic streams corresponding to spoken phrases, only the most limited forms of stemming of the candidate search phrases are employed by the index generator 21 - so for example, only certain stop words might be trimmed from either end of the search string.

Other processing of the candidate search phrases might include natural language processing (NLP) of the word sequences to convert written forms into one or more alternative strings more closely resembling normal speech. For example, the string "2012" might be converted into "twenty twelve" if the context suggested a date. Multiple alternatives arise if the context is ambiguous or there are variant spoken forms - "two thousand twelve" would be another way of saying the year in a date context. The related process of translating from multiple possible spoken forms to a consistent written form is known as "inverse text normalization" (see for example US patent application 2009/0157385).

Once the index of search phrases 15" is provided, it can now be made available for query expansion.

In the present embodiment, users 22 access the search system 10 via a search interface 24. Typically this could comprise a web application accessed across the network 16, nonetheless, the application could equally be implemented as a stand-alone or dedicated client-server application.

Users input their search query comprising a text string. Phonetic audio search works better on longer search expressions, and so the goal of a query expander 28 is to find sets of sequences of words (N-grams) as possible search phrases based on the initial text search string supplied through the search interface.

In the present embodiment, the query expander 28 operates in 2 phases:
- In a first phase, a conventional type text search engine, for example, Lucene, is employed to locate an ordered sequence of (pseudo-relevant) documents from the reference database 15' which it deems relevant to the initial search query. In the embodiment, each pseudo-relevant document is given an associated relevance weighting and any scheme can be employed, for example, BM25 described in: Stephen Robertson and Hugo Zaragoza. SIGIR 2007 tutorial 2d "The probabilistic relevance model: Bm25 and beyond" in Wessel Kraaij, Arjen P. de Vries, Charles L. A. Clarke, Norbert Fuhr, and Noriko Kando, editors, SIGIR ACM, 2007, to weight the documents. In one implementation, the number of pseudo-relevant documents is set to 50. Some of these documents of course may not be relevant (or as relevant as they appear to the search engine) and optionally, the search interface 24 could be arranged to enable the user 22 to review the returned pseudo-relevant documents and to accept/reject some number of the documents.
- In a second phase, a number, typically 20, of search phrases is chosen from the set of candidate N-grams associated with the set of pseudo-relevant documents and ordered by relevance. The score for each N-gram is based on the statistics of occurrences of the N-grams within the pseudo-relevant documents produced by the search engine; the document relevance weighting produced by first phase operation of the search engine; and possibly other statistics pertaining to the reference database 15',15" as a whole, for example an N-gram's distinctiveness within the reference database as a whole rather than just within the set of pseudo-relevant documents.

The resulting set of search expressions provided by the expander 28 can in turn be provided to a modifier 30 before the search is executed. So, in one implementation, the set of search expressions is presented via the search interface 24 (connection not shown) to the user 22 for manual verification, augmentation and/or deletion. It would also be possible for the modifier 30 to return the user-specified (or verified) expressions to the expander 28 to repeat the query expansion process based on modified expressions in order to refine or extend the set of terms.

In other implementations, the modifier 30 could use the methods disclosed in Koen Deschacht et al. 2012, "The latent words language model", Computer Speech and Language 26, 384-409 to expand the set of search expressions to include synonyms and/or find more related words/phrases.

Once the expanded set of search expressions has been finally determined, it is submitted to a search engine 20 which uses a phonetic representation of each of the set of search expressions to search phonetic representations of audio information stored within the index database 14". In one implementation, the Aurix audio miner phonetic search engine scans the index database 14" for occurrences of each of the set of search expressions and returns a stream of search hits, each including: an identity of the media file within the database 14' where the search expression occurs, time information indicating the location within the media file of the search expression, identity of the search expression and possibly a match score. In one particularly advantageous implementation of the present invention, the search engine 20 and index database 14" are implemented on a distributed file sharing (DFS) platform as disclosed in co-filed European Application No. 13170987.5 entitled "A system and method for phonetic searching of data" (Ref: 512125-EP-NP / P105534EP00). Here audio information from the database 14' is indexed into a set of archive files 14" making the performance of parallel processing search tasks quite efficient.

In any case, the search engine 20 provides the stream of search hits as they are generated for each search expression to an aggregation mechanism 32 which processes the hits. The aggregator 32 can perform any combination of the following steps:
a) thresholding, based on match scores, to remove the least relevant hits;
b) performing overlap removal where a hit is removed if another, better scoring, hit overlaps it by more than a specified fraction (say 30%) of the duration of the shorter of the two hits;
c.1) counting the occurrences of search hits so that a hit is only reported if, within a particular time window (default 10 seconds), at least a given minimum count (say 2) of hits for distinct search expressions within the expanded set of search expressions are found ;
c.2) alternatively, rather than requiring a minimum number of matches for distinct expressions, matches for any of the expressions could be counted so, for example, for a set of search expressions "A", "B" and "C" where two matches were required, then two matches for "A" might be sufficient to trigger a hit;
d) performing a weighted summation similar to that disclosed in J. Wright, M. Carey, E. Parris, "Improved topic spotting through statistical modelling of keyword dependencies", in: Proc. IEEE ICASSP, vol. 1, IEEE, Detroit, 1995, pp. 313-316.), except that the weights, rather than being trained from labelled audio material, are derived from either (or a combination) of: (i) the search expression scores and any statistics obtained during query expansion and (ii) the phonetic search match score corresponding to the particular search hit.

In some implementations, at the modifier stage, the search interface 24 which allows the user 22 to adjust the expanded set of search expressions could be arranged to allow the user to specify Boolean combinations of the search expressions within the expanded set of search expressions. Thus the results from search engine 20 could be combined by the aggregator 32 in accordance with the Boolean logic specified for the search expressions.

In any case, once aggregation is complete or indeed even as hits are being generated, the set of search results is passed back to the user 22 via the search interface 24.

There are of course many possibilities for extending the functionality of the above described embodiment. For example, search results do not have to be passed back to the same user who formulated the original query; nor does a query have to be formulated from scratch each time a search is executed. For example, it will be seen that the final query which is used by the search engine 20 to provide what might be a quite useful media analysis could be saved and labelled for example with a topic identifier. Then the saved query could either be repeated by the original user later, perhaps limited to the most recently acquired media fulfilling the query; or alternatively the query could be re-executed immediately by any users who have an interest in the topic identified by the saved search label. Indeed query results can be proactively disseminated through social networks of individuals who have indicated an interest in the topic identifier in the form of newsfeeds.

Thus, it will be appreciated that for the purposes of simplicity, in the above illustrated embodiment, media is shown as being stored in a database 14'. However, the media information being searched could equally be live, streamed media information being indexed and scanned with expanded search queries to automatically detect topics being broadcast and to notify interested users of the occurrence of a topic of interest within a programme being broadcast.

The invention is not limited to the embodiment(s) described herein but can be amended or modified without departing from the scope of the present invention.

## Claims

1. A method for phonetically searching media, said media including a plurality of audio tracks, the method comprising the steps of:
a) indexing each audio track to provide a phonetic representation of each audio track;
b) obtaining a text search query;
c) searching for the text query against a set of reference documents to obtain a subset of pseudo-relevant documents;
d) examining the pseudo-relevant documents for a set of search expressions characterizing the pseudo-relevant documents;
e) providing a phonetic representation corresponding to at least some of the set of search expressions;
f) for each of said phonetic representations of said search expressions, phonetically searching said indexed phonetic representations for one or more of said plurality of audio tracks to provide any indicators of the incidence of said search expression within said one or more audio tracks;
g) combining the resulting indicators from said phonetic searching into a set of combined results for each of the set of search expressions; and
h) returning the combined results.

2. A method according to claim 1 comprising storing said media in a remote database and providing said phonetic representations of said audio tracks locally.

3. A method according to claim 1 comprising extracting said reference documents from any combination of: websites, product manuals, social networking sources or news feeds.

4. A method according to claim 3 comprising processing extracted reference documents according to any combination of the following rules:
• replacing specific numbers or dates within said reference documents with generic strings;
• replacing formulae within said reference documents with generic strings;
• removing boilerplates from said reference documents;
• replacing non-standard characters within said reference documents with generic strings;
• in structured documents comprising nodes with fragments of text, removing known non-distinctive nodes;
• removing duplicated reference documents and paragraphs duplicated across reference documents; and
• removing frequently occurring paragraphs from reference documents.

5. A method according to claim 1 comprising for each reference document, generating sets of expressions comprising N words and counting instances of each expression in each reference document

6. A method according to claim 5 wherein said counting comprises either:
summing counts for expressions which only differ according to any combination of:
case, apostrophes, plurals, hyphenation, trailing and leading stop-words; discounting expressions with a phonetic length less than a threshold; or discounting expressions that appear less than a threshold number of times within the set of reference documents.

7. A method according to claim 5 further comprising either: removing leading and trailing stop-words from at least some of said expressions; or providing one or more alternative spoken forms corresponding to at least some of said expressions.

8. A method according to claim 5 wherein step c) comprises providing a ranked list of pseudo-relevant documents in accordance to their relevance to the search query.

9. A method according to claim 1 wherein step c) comprises the step of:
responsive to user interaction, adjusting the set of pseudo-relevant documents.

10. A method according to claim 8 wherein step d) comprises choosing the set of search expressions at least as a function of the ranking of the pseudo-relevant documents in which the search expressions occur, and preferably choosing the set of search expressions at least as a function of the count of said search expressions within the pseudo-relevant documents in which the search expressions occur.

11. A method according to claim 1 further comprising: prior to step e) and responsive to user interaction, adjusting the set of search expressions.

12. A method according to claim 1 comprising repeating steps c) and d) with each of the set of search expressions and merging the resulting set.

13. A method according to claim 1 wherein said combining comprises either:
removing overlaps within said audio tracks from search results; or providing user-specified Boolean combinations of the search results.

14. A method according to claim 2 wherein said media database comprises either:
recordings of contacts processed by a contact center; one of television or radio broadcast programmes; recordings of video calls; or video recorded events.

15. A method according to claim 1 wherein said media comprises live broadcast media, live audio or video calls, or live events.
